# EUROPÄISCHE PATENTSCHRIFT

(11) **EP 3 444 473 B1**
(45) Veröffentlichungstag und Bekanntmachung des Hinweises auf die Patenterteilung: **23.02.2022**
(21) Anmeldenummer: 18189067.4
(22) Anmeldetag: 14.08.2018
(51) Int. Cl.: F03D 80/20, F03D 17/00, F03D 7/02

(54) **STEUERUNGSVORRICHTUNG FÜR EINE WINDENERGIEANLAGE UND VERFAHREN ZUM BETRIEB EINER WINDENERGIEANLAGE**
CONTROL DEVICE FOR A WIND ENERGY ASSEMBLY AND METHOD FOR OPERATING A WIND ENERGY ASSEMBLY
DISPOSITIF DE COMMANDE POUR UNE ÉOLIENNE ET PROCÉDÉ DE FONCTIONNEMENT D'UNE ÉOLIENNE

(30) Priorität: 15.08.2017 DE 102017007656
(43) Veröffentlichungstag der Anmeldung: 20.02.2019
(73) Patentinhaber: Siemens Gamesa Renewable Energy Service GmbH, 20097 Hamburg (DE)
(72) Erfinder: Poitzsch, Jochen, 25469 Halstenbek (DE); Gätjens, Jörg, 24783 Osterrönfeld (DE); Füser, Bastian, 24360 Barkelsby (DE)
(74) Vertreter: Glawe, Delfs, Moll

(56) Entgegenhaltungen:
- US-B2- 8 310 075
- Windenergieanlagen Enercon ET AL: "Technische Beschreibung", , 11. Mai 2017 (2017-05-11), XP055538478, Gefunden im Internet: URL:https://www.landkreis-stendal.de/de/da tei/anzeigen/id/18967,1037/4.2.2_technisch e_beschreibung_schattenabschaltung.pdf [gefunden am 2019-01-04]

## Beschreibung

Die Erfindung betrifft eine Steuerungsvorrichtung für einen Windenergieanlage sowie ein Verfahren zum Betrieb einer Windenergieanlage und ein entsprechendes Computerprogrammprodukt.

Windenergieanlagen sind aus dem Stand der Technik bekannt. Sie umfassen in der Regel einen Rotor, der drehbar um eine im Wesentlichen horizontale Achse an einer Gondel angeordnet ist, wobei die Gondel um eine vertikale Achse drehbar auf einem Turm angeordnet ist. Der Rotor umfasst in der Regel drei, hinsichtlich des Blattanstellwinkels einstellbare Rotorblätter und treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann. Zur Steuerung der diversen Komponenten einer Windenergieanlage ist eine Steuerung vorgesehen, die auf Basis von unmittelbar an der Windenergieanlage gewonnenen oder von Extern übermittelten Messwerten sowie Steuerungsvorgaben, bspw. durch die Netzbetreiber, die Windenergieanlage steuert.

Aufgrund der beachtlichen Höhe von Windenergieanlagentürmen und großen Rotorblattlängen kann es bei strahlendem Sonnenschein auch entfernt von der Windenergieanlage zu nicht unerheblichen optischen Beeinträchtigungen in Form von periodischem Schattenwurf aufgrund der sich drehenden Rotorblätter kommen. Ein entsprechender Schattenwurf ist insbesondere im Bereich von Wohnbebauung unerwünscht und häufig immissionsrechtlich untersagt.

Im Stand der Technik ist es daher bekannt, den Betrieb einer Windenergieanlage zu unterbrechen und den Rotor anzuhalten, wenn ein periodischer Schattenwurf an zuvor definierten Immissionspunkten, bspw. im Bereich von Wohngebäude o.ä., festgestellt wird bzw. zu erwarten ist. Dazu sind Abschaltvorrichtungen bekannt, in denen zunächst allgemein Zeiträume hinterlegt sind, in denen grundsätzlich das Risiko von unzulässigem Schattenwurf auf Immissionspunkte besteht. Hierzu werden aus der Position der Windenergieanlage sowie der Lage der vorgegebenen Immissionspunkte anhand des jahres- und tageszeitlichen Verlaufs der Sonne diejenigen Zeiten berechnet, an denen bei strahlendem Sonnenschein Schattenwurf auf den Immissionspunkten grundsätzlich auftreten kann. Über einen oder mehrere, an der Windenergieanlage angeordnete Lichtsensoren wird dann in den fraglichen Zeiträumen überprüft, ob eine relevanten Schattenwurf verursachende direkte Sonneneinstrahlung auf die Windenergieanlage vorliegt oder ob diffuse Lichtverhältnisse, bspw. aufgrund von Bewölkung, vorliegen, die keinen, eine Abschaltung der Windenergieanlage erfordernden Schattenwurf erzeugt.

Die beschriebene Abschaltautomatik ist in der Regel als externe Komponente ausgestaltet, die unmittelbar oder über einen Kommunikations-Bus mit der Steuerung der Windenergieanlage verbunden ist. Diese externe Komponente ermittelt anhand von darin abgelegter Zeiträume und daran angeordneter oder damit verbundener Sensoren, ob ein die Abschaltung der Windenergieanlage erfordernder Schattenwurf vorliegt. Ist dies der Fall, wird ein entsprechendes Signal an die Steuerung der Windenergieanlage übermittelt, die daraufhin die Windenergieanlage stillsetzt, bis von der externen Komponente das Signal erhalten wird, dass bspw. aufgrund der Sonnenwanderung kein unzulässiger Schattenwurf mehr zu erwarten ist.

Die Funktion der Abschaltautomatik und der Kommunikationsstrecke zwischen Abschaltautomatik und Steuerung der Windenergieanlage wird regelmäßig überprüft. Sobald eine Störung festgestellt wird, muss die Windenergieanlage solange stillgesetzt werden, bis die Störung behoben ist, um unerwünschten und immissionsrechtlich unzulässigen Schattenwurf auf jeden Fall ausschließen zu können. Dies hat häufig einen nicht unerheblichen Ertragsausfall zur Folge, was nachteilig ist.

Ein Beispiel einer Lösung aus dem Stand der Technik ist in der am 2017-05-11 von der Firma Enercon herausgegebenen "Technischen Beschreibung" zu finden (URL: https://www.landkreis-stendal.de/de/datei/anzeigen/ id/18967,1037/4.2.2_technische_beschreibung_schattenabschaltung.pdf).

Der Erfindung liegt die Aufgabe zugrunde, einen Steuerungsvorrichtung für eine Windenergieanlage und Verfahren zum Betrieb einer Windenergieanlage zu schaffen, bei der die Nachteile aus dem Stand der Technik nicht mehr oder nur noch in vermindertem Umfang auftreten.

Gelöst wird diese Aufgabe durch eine Steuerungsvorrichtung gemäß dem Hauptanspruch sowie ein Verfahren gemäß dem nebengeordneten Anspruch 7 und ein Computerprogrammprodukt gemäß dem nebengeordneten Anspruch 12. Vorteilhafte Weiterbildungen sind Gegenstand der abhängigen Ansprüche.

Demnach betrifft die Erfindung eine Steuerungsvorrichtung für eine Windenergieanlage, welche zum Steuern der Komponenten der Windenergieanlage im Normalbetrieb in Abhängigkeit von Eingangssignalen und zum Abschalten der Windenergieanlage bei Empfang eines Stoppsignals von einem Schattenwurfmodul als Eingangssignal ausgebildet ist, wobei in der Steuerungsvorrichtung Zeiträume, in denen unzulässiger Schattenwurf möglich ist, unmittelbar hinterlegt sind und die Steuerungsvorrichtung dazu ausgebildet ist, die Windenergieanlage bei Ausfall oder Fehlfunktion des Schattenwurfmoduls in den in der Steuerungsvorrichtung hinterlegten Zeiträumen abzuschalten.

Des Weiteren betrifft die Erfindung ein Verfahren zum Betrieb einer Windenergieanlage, die zur Vermeidung von unzulässigen Schattenwurf bei einem entsprechenden Stoppsignal von einem Schattenwurfmodul abgeschaltet wird, wobei bei Ausfall oder Fehlfunktion des Schattenwurfmoduls die Windenergieanlage zu in der Steuerungsvorrichtung der Windenergieanlage hinterlegten Zeiträumen, in denen unzulässiger Schattenwurf grundsätzlich möglich ist, abgeschaltet wird.

Die Erfindung betrifft auch ein Computerprogrammprodukt umfassend Programmteile, welche, wenn geladen in die Steuerungsvorrichtung einer Windenergieanlage, zur Durchführung des erfindungsgemäßen Verfahrens ausgelegt sind.

Zunächst werden einige, in Zusammenhang mit der Erfindung verwendete Begriffe erläutert.

Mit "Abschalten einer Windenergieanlage" ist das zeitweise Stillsetzen des Rotors bezeichnet, bei dem keine elektrische Wirk-Leistung von der Windenergieanlage in das Netz eingespeist wird.

"Ausfall oder Fehlfunktion des Schattenwurfmoduls" bedeutet, dass evtl. Stoppsignale des Schattenwurfmoduls nicht mehr oder nicht mehr ordnungsgemäß erzeugt und/oder an die Steuerungsvorrichtung übermittelt werden. Das Schattenwurfmodul kann dabei selbst vom Ausfall oder einer Fehlfunktion betroffen sein. Es ist aber auch möglich, dass die Kommunikation zwischen dem an sich fehlerfrei arbeitenden Schattenwurfmodul und der Steuerungsvorrichtung gestört ist, was von der Steuerungsvorrichtung dennoch als Ausfall oder Fehlfunktion des Schattenwurfmoduls betrachtet wird.

Eine "Steuerungsvorrichtung für eine Windenergieanlage" ist mit den einzelnen, steuerbaren Komponenten der Windenergieanlage unmittelbar oder über den Komponenten zugeordneten Steuereinheiten verbunden und in der Lage, den Betrieb der Windenergieanlage durch Ansteuerung der einzelnen Komponenten zu steuern. Für diese Steuerung werden von der Steuerungsvorrichtung diverse Eingangssignale, bspw. von Sensoren ermittelte Messwerte, aber auch Vorgaben vom Netzbetreiber, berücksichtigt und nach vorgegebenen Regeln in Steuerungssignale umgesetzt. Die Steuerungsvorrichtung ist dabei regelmäßig als speicherprogrammierbare Steuerung ausgestaltet, in denen sich die Steuerungslogik programmieren lässt. Zu steuerbaren Komponenten gehören bspw. die diversen Antriebe für Azimut- und Blattanstellwinkelverstellung, der Umrichter, häufig mit einer dezidierten Steuereinheit, sowie steuerbare Schalter. Die Steuervorrichtung kann von Windgeschwindigkeits- und Richtungsmessern, Temperaturfühlern sowie Spannungs- und Stromstärkeaufnehmern mit Eingangssignalen versorgt werden. Auch über ein Terminal an der Windenergieanlage eingegebene oder über ein Datenfernübertragungsnetz übermittelte Steuerungssignale von dem Windenergieanlagenbetreiber oder dem Betreiber des Versorgungsnetzes, in welches die Windenergieanlage Leistung einspeist, gelten in Zusammenhang mit der Erfindung als Eingangssignale für die Steuerungsvorrichtung, die bei der Steuerung der Windenergieanlage berücksichtigt werden.

Ein bei der Steuerung der Windenergieanlage zur berücksichtigendes Eingangssignal ist ein von einem Schattenwurfmodul erzeugtes Stoppsignal. Das Schattenwurfmodul ermittelt dabei, wie aus dem Stand der Technik bekannt, anhand vorgegebener Zeiträume, in denen relevanter Schattenwurf grundsätzlich auftreten kann, und der über einen oder mehrere Licht- oder Helligkeitssensoren ermittelbaren Lichtsituation, ob ein unzulässiger Schattenwurf vorliegt. Die Zeiträume können dabei aus den Positionen einer Windenergieanlage sowie derjenigen Immissionspunkte, auf die ein periodischer Schattenwurf der Windenergieanlage unzulässig ist, sowie dem jahres- und tageszeitlichen Verlauf der Sonne ermittelt und in dem Schattenwurfmodul abgelegt werden. Es ist auch möglich, dass dem Schattenwurfmodul lediglich die für die Berechnung der Zeiträume benötigten Informationen zur Verfügung gestellt werden und das Schattenwurfmodul die fraglichen Zeiträume selbst berechnet.

Der Erfindung liegt die Erkenntnis zugrunde, dass der bei Fehlfunktion des Schattenwurfmoduls im Stand der Technik auftretende Ertragsausfall durch einfache und kostengünstige Maßnahmen reduziert werden kann. Dabei wurde erkannt, dass das Risiko des Ertragsausfalls durch eine Fehlfunktion des Schattenwurfmoduls aufgrund einer grundsätzlich hohen Zuverlässigkeit der Schattenwurfmodule eine tatsächliche Redundanz des Schattenwurfmoduls aus Kosten- und Komplexitätsgründen zwar nicht rechtfertigt, durch die erfindungsgemäße Weiterbildung der Steuerungsvorrichtung ein evtl. Ertragsausfall bei Fehlfunktion des Schattenwurfmoduls aber dennoch deutlich reduziert werden kann. Da erfindungsgemäß die Steuerungsvorrichtung dazu auf keine zusätzlichen Eingangsgrößen zurückgreifen muss, sind weder zusätzliche Sensoren noch ist eine aufwendige Umgestaltung der Steuerungsvorrichtung erforderlich. Insbesondere im Falle einer speicherprogrammierbaren Steuerungsvorrichtung lässt sich die erfindungsgemäße Weiterbildung regelmäßig als programmierbare Zusatzlogik verwirklichen.

Die Erfindung hat erkannt, dass es im Hinblick auf den Ertragsausfall durch Fehlfunktion des Schattenwurfmoduls im Vergleich zur im Stand der Technik vorgesehenen generellen Abschaltung der Anlage günstiger ist, die Windenergieanlage grundsätzlich nur in denjenigen Zeiträumen abzuschalten, an denen Schattenwurf im Prinzip möglich ist, ohne dass dafür jedoch die für einen tatsächlichen Schattenwurf erforderlichen Lichtverhältnisse geprüft werden müssen. Hierzu werden unmittelbar in der Steuerungsvorrichtung diejenigen Zeiträume hinterlegt, in denen unzulässiger Schattenwurf möglich ist. Bei Ausfall oder Fehlfunktion des Schattenwurfmoduls schaltet die Steuerungsvorrichtung in eben diesen hinterlegten Zeiträumen die Windenergieanlage ab. In den übrigen Zeiträumen ist - da keine Gefahr eines unzulässigen Schattenwurfs besteht - ein Betrieb der Windenergieanlage möglich.

Die in der Steuerungsvorrichtung hinterlegten Zeiträume können im einfachsten Fall als jahreszeitenabhängige Zeitangaben zum Sonnenaufgang und Sonnenuntergang, ggf. jeweils mit einem vorgegebenen Offset, sein. In diesem Fall wird der Betrieb der Windenergieanlage auf die Dämmerungs- und Nachtstunden begrenzt, in denen ein Schattenwurf grundsätzlich auszuschließen ist.

Es ist aber auch möglich, dass die Zeiträume, in denen unzulässiger Schattenwurf möglich ist, anhand der geographischen Position der Windenergieanlage, der geographischen Position der Bereiche, in denen ein Schattenwurf unzulässig ist, sowie dem Sonnenstandverlauf in der Steuerungseinheit in Form entsprechender Zeitangaben hinterlegt werden. Diese Zeitangaben können letztendlich mit denjenigen Angaben, die auch in einem Schattenwurfmodul hinterlegt werden, übereinstimmen.

Schlussendlich ist es selbstverständliche auch möglich, dass die Zeiträume, in denen unzulässiger Schattenwurf möglich ist, anhand der geographischen Position der Windenergieanlage, der geographischen Position der Bereiche, in denen ein Schattenwurf unzulässig ist, sowie dem Sonnenstandverlauf von der Steuerungseinheit selbst berechnet werden. In diesem Fall müssen der Steuerungsvorrichtung - analog zu einem entsprechen Schattenwurfmodul - die für die Berechnung der Zeiträume benötigten Informationen zur Verfügung gestellt werden, woraufhin die Zeiträume dann von der Steuerungsvorrichtung selbst berechnet werden können.

Auch wenn die Erfindung grundsätzlich auch in Steuerungsvorrichtungen eingesetzt werden kann, in denen ein Schattenwurfmodul als Softwaremodul implementiert ist, ist es bevorzugt, wenn die Steuerungsvorrichtung zum Empfang von Signalen eines externen, von der Steuerungsvorrichtung getrennt ausgeführten Schattenwurfmoduls ausgebildet ist.

Es ist weiter bevorzugt, wenn die Steuerungsvorrichtung zum Empfang eines Fehlfunktionssignals von dem Schattenwurfmodul und/oder zur Feststellung des Ausbleibens von Statussignalen des Schattenwurfmoduls ausgebildet ist, um bei Empfang eines entsprechenden Fehlfunktionssignals und/oder Ausbleibens der entsprechenden Statussignale die Windenergieanlage in den in der Steuerungsvorrichtung hinterlegten Zeiträumen abzuschalten. Die Steuerungsvorrichtung ist demnach in der Lage, unmittelbar auf eine Fehlfunktionssignals des Schattenwurfmoduls zu reagieren. Außerdem kann sie einen Ausfall des Schattenwurfmoduls selbstständig anhand des Ausbleibens von Statussignalen des Schattenwurfmoduls detektieren. Bei diesen Statussignalen kann es sich von dem Schattenwurfmodul im Normalbetrieb regelmäßig oder lediglich auf Aufforderung der Steuerungsvorrichtung gesendete Signale handeln. Es ist auch möglich, eine Fehlfunktion des Schattenwurfmoduls zu identifizieren, wenn das Schattenwurfmodul ein Stoppsignal zu einem Zeitpunkt sendet, in dem gemäß den in der Steuerungsvorrichtung hinterlegten Zeiträumen einen die Abschaltung der Anlage erfordernden Schattenwurf grundsätzlich nicht möglich ist. Es ist daher bevorzugt, wenn die Steuerungsvorrichtung dazu ausgebildet ist, nach Empfang eines Stoppsignals von dem Schattenwurfmodul außerhalb der in der Steuerungsvorrichtung hinterlegten Zeiträume Stoppsignale des Schattenwurfmoduls als fehlerhaft zu ignorieren und die Windenergieanlage in den in der Steuerungsvorrichtung hinterlegten Zeiträumen abzuschalten.

Zur Erläuterung des erfindungsgemäßen Verfahrens wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figur 1:: eine schematische Darstellung einer Windenergieanlage mit erfindungsgemäßer Steuerungsvorrichtung nebst Schattenwurf; und
- Figur 2:: eine schematische Detaildarstellung der Gondel der Windenergieanlage aus Figur 1.

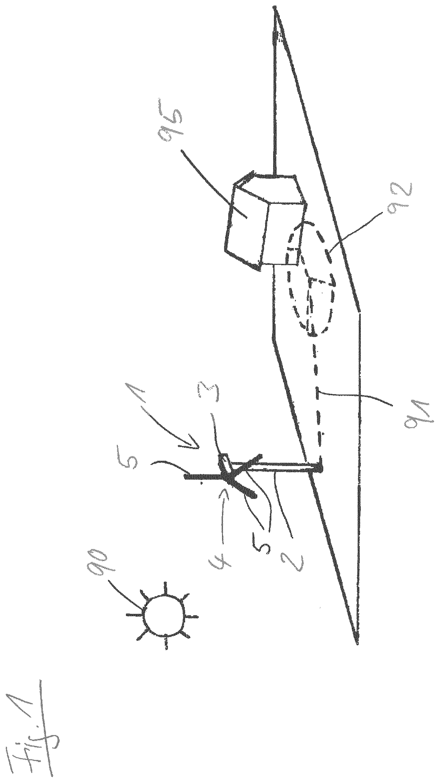

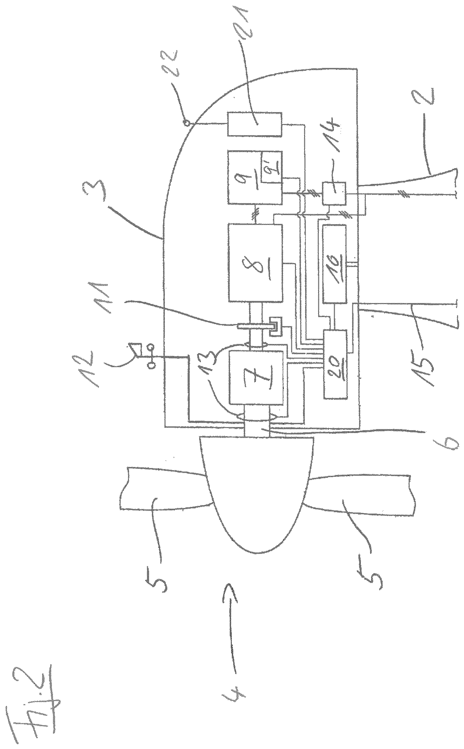

In Figur 1 ist schematisch eine Windenergieanlage 1 mit dem von ihr erzeugten Schatten dargestellt. Wie nachfolgend in Zusammenhang mit Figur 2 näher erläutert wird, ist die Steuerungsvorrichtung der Windenergieanlage erfindungsgemäß ausgestaltet, sodass ihr Betrieb gemäß des erfindungsgemäßen Verfahrens erfolgt.

Die Windenergieanlage 1 umfasst einen Turm 2, auf dessen Spitze eine in Azimutrichtung drehbare Gondel 3 angeordnet ist. An der Gondel 3 ist ein Rotor 4 mit drei Rotorblättern 5 drehbar um eine im Wesentlichen horizontale Achse befestigt, der einen im Innern der Gondel angeordneten Generator 8 (s. Figur 2) zur Umwandlung von Windenergie in elektrische Energie antreibt.

Der Schatten der Windenergieanlage 1 bei einem exemplarisch dargestellten Stand der Sonne 90 und wolkenfreiem Himmel ist durch die gestrichelte Linie 91 angedeutet. Derjenige Bereich, in dem sich bei sich drehendendem Rotor 4 ein periodischer Schattenwurf ergibt, ist durch die Linie 92 angedeutet.

Wie in Figur 1 dargestellt, kann der Schatten 91 und insbesondere der periodische Schattenwurf 92 auf ein Wohnhaus 95 fallen, was unerwünscht und immissionsrechtlich regelmäßig untersagt ist. In der Folge besteht die grundsätzliche Anforderung, die Windenergieanlage 1 in den Situationen abzuschalten, in denen ein entsprechender Schattenwurf auf definierte Bereiche bzw. Immissionspunkte vorliegt.

In Figur 2 ist die Gondel 3 der Windenergieanlage 1 inklusive der Steuerung, mit der die vorbeschriebene Abschaltung bei Schattenwurf auf zuvor definierte Bereiche erreicht wird, dargestellt.

Der Rotor 4, dessen Rotorblätter 5 durch nicht dargestellte Pitch-Verstellantriebe hinsichtlich des Blattwinkels einstellbar sind, treibt über einer Rotorwelle 6 und ein zwischengeschaltetes Getriebe 7 den Generator 8 an, bei dem es sich um einen doppeltgespeisten Asynchrongenerator handelt. Ein Teil der vom Generator 8 erzeugten elektrischen Energie gelangt über den Umrichter 9 mit dezidierter Umrichtersteuerung 9', der andere Teil unmittelbar zur einem am Fuß des Turms 2 angeordneten Transformator (nicht dargestellt) und von dort aus in ein Versorgungsnetz. Alternativ ist die Windenergieanlage auch mit Käfigläufergenerator und Vollumrichter ausgerüstet. Des Weiteren ist in der Gondel 3 noch ein Azimutverstellantrieb 10, mit dem die Gondel 3 um die Achse des Turms 2 gedreht werden kann, eine Bremse 11 zum Abbremsen des Rotors 4, ein Anemometer mit Windrichtungsgeber 12, Drehzahlmesser 13, ein Spannungs- und Stromstärkemesseinrichtung 14 sowie ein Schattenwurfmodul 21 mit Helligkeitssensor 22 vorgesehen.

Sämtliche Komponenten 8-14, 21, 22, die steuerbar sind und/oder für den Betrieb der Windenergieanlage 1 relevante Messdaten bereitstellen, sind mit der zentralen Steuerungsvorrichtung 20 verbunden. Die Steuerungsvorrichtung 20 kann darüber hinaus noch über die Datenleitung 15 externe Steuerungsvorgaben - bspw. vom Windenergieanlagen- und/oder Versorgungsnetzbetreiber - als Eingangssignal empfangen.

Die Steuerungsvorrichtung 20 ist dazu ausgebildet, die einzelnen Komponenten 8-14, 21, 22 der Windenergieanlage in Abhängigkeit der von diesen Komponenten 8-14, 21, 22 als Eingangssignale erhaltenen Informationen zu steuern, dass die Windenergieanlage 1 zu jedem Zeitpunkt die maximal mögliche Leistung entsprechend den über die Datenleitung 15 erhaltenen Steuerungsvorgaben in das Versorgungsnetz einspeist.

Das Schattenwurfmodul 21 ist gemäß dem Stand der Technik ausgebildet. In diesem externen Modul 21 sind Zeiträume hinterlegt, in denen grundsätzlich ein unzulässiger Schattenwurf möglich ist. Diese Zeiträume lassen sich aus der Position der Windenergieanlage 1, der Position der Immissionspunkte (vgl. bspw. Lage der Wohnbebauung 91 in Figur 1), sowie dem jahres- und tageszeitlichen Verlauf der Sonne 90 bestimmen. Für diese Zeiträume gilt, dass bei strahlendem Sonnenschein ein unzulässiger Schattenwurf vorliegt. Um zu überprüfen, ob die herrschenden Lichtverhältnisse tatsächlich zu einem unzulässigen Schattenwurf führen, wird mit Hilfe des Helligkeitssensors 22 überprüft, ob tatsächlich unmittelbare Sonneneinstrahlung besteht oder ob bspw. aufgrund von Bewölkung nur diffuse Lichtverhältnisse herrschen. Im letztgenannten Fall tritt kein unzulässiger Schattenwurf auf, sodass das Schattenwurfmodul 21 nur bei unmittelbarer Sonneneinstrahlung in den genannten Zeiträumen ein Stoppsignal an die Steuerungsvorrichtung 20 übermittelt. Empfängt die Steuerungsvorrichtung 20 ein entsprechendes Stoppsignal als Eingangssignal schaltet die Steuerungsvorrichtung 20 die Windenergieanlage 1 ab und fährt diese erst wieder an, wenn sie von dem Schattenwurfmodul 21 die Information erhält, dass kein unzulässiger Schattenwurf mehr vorliegt.

In der Steuerungsvorrichtung 20 selbst sind ebenfalls die Zeiträume, in denen grundsätzlich ein unzulässiger Schattenwurf auftreten kann, hinterlegt. Die in der Steuerungsvorrichtung 20 hinterlegten Zeiträume decken dabei zumindest die in dem Schattenwurfmodul 21 hinterlegten Zeiträume ab. Die Steuerungsvorrichtung 20 ist dabei dazu ausgebildet, bei Ausfall oder Fehlfunktion des Schattenwurfmoduls 21 die Windenergieanlage 1 in den in der Steuerungsvorrichtung 20 selbst hinterlegten Zeiträumen abzuschalten. Dadurch ist ausgeschlossen, dass es zu einem unzulässigen Schattenwurf kommt. Gleichzeitig kann die Windenergieanlage 1 außerhalb der hinterlegten Zeiträume betrieben werden.

Die Steuerungsvorrichtung 20 kann einen Ausfall bzw. eine Fehlfunktion des Schattenwurfmoduls 21 auf unterschiedlichen Wegen erkennen.

Zum einen kann das Schattenwurfmodul 21 selbst eine Fehlfunktion in Form eines Fehlfunktionssignals an die Steuerungsvorrichtung 20 melden. Zum anderen kann vorgesehen sein, dass das Schattenwurfmodul 21 regelmäßig Statussignale an die Steuerungsvorrichtung 20 sendet. Ein Ausbleiben dieser Statussignale deutet auf eine Fehlfunktion oder einen Ausfall des Schattenwurfmoduls 21 selbst oder aber der Kommunikationsleitung zwischen Steuerungsvorrichtung 20 und Schattenwurfmodul 21 hin. Auch wird der Empfang eines Stoppsignals von dem Schattenwurfmodul 21 außerhalb der in der Steuerungsvorrichtung hinterlegten Zeiträume, in denen überhaupt nur unzulässiger Schattenwurf auftreten kann, als offensichtlich fehlerhaft erkannt. In der Folge werden die Signale des Schattenwurfmoduls 21 ignoriert und von einer Fehlfunktion des Schattenwurfmoduls 21 ausgegangen. In allen Fällen wird ein Ausfall oder eine Fehlfunktion des Schattenwurfmodul 21 erkannt und die Windenergieanlage 1 in den in der Steuerungsvorrichtung 20 hinterlegten Zeiträumen abgeschaltet.

## Patentansprüche

1. Steuerungsvorrichtung (20) für eine Windenergieanlage (1), welche zum Steuern der Komponenten (8-14) der Windenergieanlage (1) im Normalbetrieb in Abhängigkeit von Eingangssignalen und zum Abschalten der Windenergieanlage (1) bei Empfang eines Stoppsignals von einem Schattenwurfmodul (21) als Eingangssignal ausgebildet ist, wobei in der Steuerungsvorrichtung (20) Zeiträume, in denen unzulässiger Schattenwurf möglich ist, unmittelbar hinterlegt sind und die Steuerungsvorrichtung (20) dazu ausgebildet ist, die Windenergieanlage (1) bei Ausfall oder Fehlfunktion des Schattenwurfmoduls (21) in den in der Steuerungsvorrichtung (20) hinterlegten Zeiträumen abzuschalten,
**dadurch gekennzeichnet, dass**
die Steuerungsvorrichtung (20) zum Empfang eines Fehlfunktionssignals von dem Schattenwurfmodul (21) ausgebildet ist, um bei Empfang eines entsprechenden Signals die Windenergieanlage (1) in den in der Steuerungsvorrichtung (20) hinterlegten Zeiträumen abzuschalten..

2. Steuerungsvorrichtung nach Anspruch 1,
**dadurch gekennzeichnet, dass**
die Steuerungsvorrichtung (20) zum Empfang von Signalen eines externen, von der Steuerungsvorrichtung (20) getrennt ausgeführten Schattenwurfmoduls (21) ausgebildet ist.

3. Steuerungsvorrichtung nach einem der vorhergehenden Ansprüche,
**dadurch gekennzeichnet, dass**
die Steuerungsvorrichtung (20) zum Empfang von Statussignalen von dem Schattenwurfmodul (21) ausgebildet ist, um bei Ausbleiben entsprechender Signale die Windenergieanlage (1) in den in der Steuerungsvorrichtung (20) hinterlegten Zeiträumen abzuschalten.

4. Steuerungsvorrichtung nach einem der vorhergehenden Ansprüche,
**dadurch gekennzeichnet, dass**
die Steuerungsvorrichtung (20) dazu ausgebildet ist, nach Empfang eines Stoppsignals von dem Schattenwurfmodul (21) außerhalb der in der Steuerungsvorrichtung (20) hinterlegten Zeiträume Stoppsignale des Schattenwurfmoduls (21) als fehlerhaft zu ignorieren und die Windenergieanlage (1) in den in der Steuerungsvorrichtung (20) hinterlegten Zeiträumen abzuschalten.

5. Steuerungsvorrichtung nach einem der vorhergehenden Ansprüche,
**dadurch gekennzeichnet, dass**
die Zeiträume, in denen unzulässiger Schattenwurf möglich ist, durch in der Steuerungseinheit (20) hinterlegte Zeitangaben definiert sind.

6. Steuerungsvorrichtung nach einem der vorhergehenden Ansprüche,
**dadurch gekennzeichnet, dass**
die Zeiträume, in denen unzulässiger Schattenwurf möglich ist, anhand der geographischen Position der Windenergieanlage (1), der geographischen Position der Bereiche, in denen ein Schattenwurf unzulässig ist, sowie dem Sonnenstandverlauf, vorzugsweise von der Steuerungseinheit selbst, berechnet sind.

7. Verfahren zum Betrieb einer Windenergieanlage (1), die zur Vermeidung von unzulässigen Schattenwurf bei einem entsprechenden Stoppsignal von einem Schattenwurfmodul (21) abgeschaltet wird, wobei bei Ausfall oder Fehlfunktion des Schattenwurfmoduls (21) die Windenergieanlage (1) zu in der Steuerungsvorrichtung (20) der Windenergieanlage (1) hinterlegten Zeiträumen, in denen unzulässiger Schattenwurf grundsätzlich möglich ist, abgeschaltet wird,
**dadurch gekennzeichnet, dass**
bei Empfang eines Fehlfunktionssignals von dem Schattenwurfmodul (21) die Windenergieanlage (1) in den in der Steuerungsvorrichtung (20) hinterlegten Zeiträumen abgeschaltet wird.

8. Verfahren nach Anspruch 7,
**dadurch gekennzeichnet, dass**
bei Ausbleibens von Statussignalen von dem Schattenwurfmodul (21) die Windenergieanlage (1) in den in der Steuerungsvorrichtung (20) hinterlegten Zeiträumen abgeschaltet wird.

9. Verfahren nach einem der Ansprüche 7 oder 8,
**dadurch gekennzeichnet, dass**
bei Empfang eines Stoppsignals von dem Schattenwurfmodul (21) außerhalb der in der Steuerungsvorrichtung (20) hinterlegten Zeiträume weitere Stoppsignale des Schattenwurfmoduls (21) als fehlerhaft ignoriert werden und die Windenergieanlage (1) in den in der Steuerungsvorrichtung (20) hinterlegten Zeiträumen abgeschaltet wird.

10. Verfahren nach einem der Ansprüche 7 bis 9,
**dadurch gekennzeichnet, dass**
die hinterlegten Zeiträume über Zeitangaben definiert sind.

11. Verfahren nach einem der Ansprüche 7 bis 10,
**dadurch gekennzeichnet, dass**
die Zeiträume, in denen unzulässiger Schattenwurf möglich ist, anhand der geographischen Position der Windenergieanlage (1), der geographischen Position der Bereiche, in denen ein Schattenwurf unzulässig ist, sowie dem Sonnenstandverlauf, vorzugsweise von der Steuerungseinheit selbst, berechnet werden.

12. Computerprogrammprodukt umfassend Programmteile, welche, wenn geladen in die Steuerungsvorrichtung (20) einer Windenergieanlage (1), zur Durchführung eines Verfahrens nach einem der Ansprüche 7 bis 11 ausgelegt sind.

## Claims

1. Control apparatus (20) for a wind power installation (1), designed to control the components (8-14) of the wind power installation (1) during normal operation on the basis of input signals and to shut down the wind power installation (1) when a stop signal is received from a shadow-casting module (21) as an input signal, wherein periods of time in which inadmissible shadow-casting is possible are stored in the control apparatus (20) directly and the control apparatus (20) is designed to shut down the wind power installation (1) in the periods of time stored in the control apparatus (20) if the shadow-casting module (21) fails or malfunctions,
**characterized in that**
the control apparatus (20) is designed to receive a malfunction signal from the shadow-casting module (21) so as, on receiving a corresponding signal, to shut down the wind power installation (1) in the periods of time stored in the control apparatus (20).

2. Control apparatus according to Claim 1,
**characterized in that**
the control apparatus (20) is designed to receive signals from an external shadow-casting module (21) embodied separately from the control apparatus (20).

3. Control apparatus according to either of the preceding claims,
**characterized in that**
the control apparatus (20) is designed to receive status signals from the shadow-casting module (21) so as, in the absence of corresponding signals, to shut down the wind power installation (1) in the periods of time stored in the control apparatus (20).

4. Control apparatus according to one of the preceding claims,
**characterized in that**
the control apparatus (20) is designed to ignore stop signals from the shadow-casting module (21) as erroneous after receiving a stop signal from the shadow-casting module (21) outside the periods of time stored in the control apparatus (20) and to shut down the wind power installation (1) in the periods of time stored in the control apparatus (20).

5. Control apparatus according to one of the preceding claims,
**characterized in that**
the periods of time in which inadmissible shadow-casting is possible are defined by time statements stored in the control unit (20).

6. Control apparatus according to one of the preceding claims,
**characterized in that**
the periods of time in which inadmissible shadow-casting is possible are computed, preferably by the control unit itself, on the basis of the geographical position of the wind power installation (1), the geographical position of the areas in which shadow-casting is inadmissible and the trajectory of the sun.

7. Method for operating a wind power installation (1) that is shut down in the event of an appropriate stop signal from a shadow-casting module (21) in order to avoid inadmissible shadow-casting, wherein failure or malfunction of the shadow-casting module (21) results in the wind power installation (1) being shut down in periods of time in which inadmissible shadow-casting is fundamentally possible that are stored in the control apparatus (20) of the wind power installation (1),
**characterized in that**
reception of a malfunction signal from the shadow-casting module (21) results in the wind power installation (1) being shut down in the periods of time stored in the control apparatus (20).

8. Method according to Claim 7,
**characterized in that**
the absence of status signals from the shadow-casting module (21) results in the wind power installation (1) being shut down in the periods of time stored in the control apparatus (20).

9. Method according to either of Claims 7 and 8, **characterized in that**
reception of a stop signal from the shadow-casting module (21) outside the periods of time stored in the control apparatus (20) results in further stop signals from the shadow-casting module (21) being ignored as erroneous and the wind power installation (1) being shut down in the periods of time stored in the control apparatus (20).

10. Method according to one of Claims 7 to 9, **characterized in that**
the stored periods of time are defined by way of time statements.

11. Method according to one of Claims 7 to 10, **characterized in that**
the periods of time in which inadmissible shadow-casting is possible are computed, preferably by the control unit itself, on the basis of the geographical position of the wind power installation (1), the geographical position of the areas in which shadow-casting is inadmissible and the trajectory of the sun.

12. Computer program product comprising program parts that, when loaded into the control apparatus (20) of a wind power installation (1), are designed to perform a method according to one of Claims 7 to 11.

## Revendications

1. Dispositif de commande (20) pour un aérogénérateur (1), lequel est configuré pour commander les composants (8-14) de l'aérogénérateur (1) en fonctionnement normal en fonction de signaux d'entrée et pour déconnecter l'aérogénérateur (1) lors de la réception d'un signal d'arrêt d'un module de projection d'ombre (21) en tant que signal d'entrée, des intervalles de temps dans lesquels une projection d'ombre non autorisée est possible étant stockés directement dans le dispositif de commande (20) et le dispositif de commande (20) étant configuré pour déconnecter l'aérogénérateur (1) dans les intervalles de temps stockés dans le dispositif de commande (20) en cas de panne ou de défaut de fonctionnement du module de projection d'ombre (21),
**caractérisé en ce que**
le dispositif de commande (20) est configuré pour recevoir un signal de défaut de fonctionnement de la part du module de projection d'ombre (21), et lors de la réception d'un signal correspondant, déconnecter l'aérogénérateur (1) dans les intervalles de temps stockés dans le dispositif de commande (20).

2. Dispositif de commande selon la revendication 1, **caractérisé en ce que** le dispositif de commande (20) est configuré pour recevoir des signaux d'un module de projection d'ombre (21) externe, réalisé séparément du dispositif de commande (20).

3. Dispositif de commande selon l'une des revendications précédentes, **caractérisé en ce que** le dispositif de commande (20) est configuré pour recevoir des signaux d'état du module de projection d'ombre (21), et pour déconnecter l'aérogénérateur (1) dans les intervalles de temps stockés dans le dispositif de commande (20) en cas d'absence de signaux correspondants.

4. Dispositif de commande selon l'une des revendications précédentes, **caractérisé en ce que** le dispositif de commande (20) est configuré pour, après la réception d'un signal d'arrêt de la part du module de projection d'ombre (21) en dehors des intervalles de temps stockés dans le dispositif de commande (20), ignorer les signaux d'arrêt du module de projection d'ombre (21) en les considérant comme incorrects et déconnecter l'aérogénérateur (1) dans les intervalles de temps stockés dans le dispositif de commande (20).

5. Dispositif de commande selon l'une des revendications précédentes, **caractérisé en ce que** les intervalles de temps dans lesquels une projection d'ombre non autorisée est possible sont définis par des indications de temps stockées dans le dispositif de commande (20).

6. Dispositif de commande selon l'une des revendications précédentes, **caractérisé en ce que** les intervalles de temps dans lesquels une projection d'ombre non autorisée est possible sont calculés à l'aide de la position géographique de l'aérogénérateur (1), de la position géographique des zones dans laquelle une projection d'ombre est non autorisée ainsi que de l'évolution de la position du soleil, de préférence par l'unité de commande elle-même.

7. Procédé pour faire fonctionner un aérogénérateur (1), qui est déconnecté par un module de projection d'ombre (21) dans le cas d'un signal d'arrêt correspondant afin d'éviter une projection d'ombre non autorisée, l'aérogénérateur (1) étant déconnecté aux intervalles de temps stockés dans le dispositif de commande (20) de l'aérogénérateur (1) en cas de panne ou de défaut de fonctionnement du module de projection d'ombre (21) de l'aérogénérateur (1), **caractérisé en ce que**
en cas de réception d'un signal de défaut de fonctionnement de la part du module de projection d'ombre (21), l'aérogénérateur (1) est déconnecté dans les intervalles de temps stockés dans le dispositif de commande (20).

8. Procédé selon la revendication 7, **caractérisé en ce qu'**en cas d'absence de signaux d'état correspondants du module de projection d'ombre (21), l'aérogénérateur (1) est déconnecté dans les intervalles de temps stockés dans le dispositif de commande (20).

9. Procédé selon l'une des revendications 7 ou 8, **caractérisé en ce qu'**en cas de réception d'un signal d'arrêt de la part du module de projection d'ombre (21) en-dehors des intervalles de temps stockés dans le dispositif de commande (20), les signaux d'arrêt supplémentaires du module de projection d'ombre (21) sont ignorés en étant considérés comme incorrects et l'aérogénérateur (1) est déconnecté dans les intervalles de temps stockés dans le dispositif de commande (20).

10. Procédé selon l'une des revendications 7 à 9, **caractérisé en ce que** les intervalles de temps stockés sont définis par des indications de temps.

11. Procédé selon l'une des revendications 7 à 10, **caractérisé en ce que** les intervalles de temps dans lesquels une projection d'ombre non autorisée est possible sont calculés à l'aide de la position géographique de l'aérogénérateur (1), de la position géographique des zones dans laquelle une projection d'ombre est non autorisée ainsi que de l'évolution de la position du soleil, de préférence par l'unité de commande elle-même.

12. Programme informatique, comprenant des parties de programme qui, lorsqu'elles sont chargées dans le dispositif de commande (20) d'un aérogénérateur (1), sont conçues pour mettre en œuvre un procédé selon l'une des revendications 7 à 11.
